# FASCICULE DE BREVET EUROPEEN

(11) **EP 1 970 236 B1**
(45) Date de publication et mention de la délivrance du brevet: **26.05.2010**
(21) Numéro de dépôt: 08290244.6
(22) Date de dépôt: 13.03.2008
(51) Int. Cl.: B60J 1/20

(54) **Système d'enroulement d'un rideau de composant à rideau enroulable de véhicule automobile, comprenant un dispositif de blocage désactivable lors du montage**
Vorhangaufrollsystem für ein Kraftfahrzeugbauteil mit einem Rollo, das eine Blockiervorrichtung umfasst, die während der Montage deaktiviert werden kann
Winding system for a blind for a vehicle component with a roller blind, comprising a locking device that can be deactivated during its assembly

(30) Priorité: 15.03.2007 FR 0701881
(43) Date de publication de la demande: 17.09.2008
(73) Titulaire: Centre d'Etude et de Recherche pour l'Automobile (CERA), 51100 Reims (FR)
(72) Inventeur: Bayle, André-Xavier, 51100 Reims (FR)
(74) Mandataire: Sayettat, Julien Christian

(56) Documents cités:
- EP-A- 0 652 136
- WO-A-2007/128288
- US-A- 1 853 150
- US-A- 5 934 354

## Description

L'invention concerne un système d'enroulement d'un rideau de composant à rideau enroulable de véhicule automobile et un composant comprenant un tel système.

Il est connu, notamment du document US-5 934 354, de réaliser un système d'enroulement d'un rideau de composant à rideau enroulable de véhicule automobile, ledit composant étant par exemple un cache bagages, un filet de sécurité ou un store pare soleil, ledit système étant monté entre un tube d'enroulement et un support, par exemple un embout ou une ébénisterie, dudit composant dans le véhicule, ledit système comprenant les caractéristiques du préambule de la revendication 1.

Le système une fois monté dans le composant à rideau enroulable, on procède à une désactivation du dispositif de blocage, qui est par exemple sous forme d'une goupille.

Le sens prédéterminé correspond au sens d'enroulement du rideau.

On dispose alors d'un composant à rideau enroulable dans lequel le rideau à l'état enroulé est maintenu en contrainte dans cet état puisque le ressort est en précontrainte dans le sens d'enroulement, ce qui évite le risque que le rideau puisse être insuffisamment enroulé.

Une telle réalisation requiert, lors de la réalisation du composant à rideau enroulable, une étape spécifique de désactivation du dispositif de blocage, ce qui complexifie la réalisation.

L'invention a pour but de pallier cet inconvénient.

A cet effet, et selon un premier aspect, l'invention propose un système d'enroulement d'un rideau de composant à rideau enroulable de véhicule automobile selon la revendication 1.

Ainsi, on supprime l'étape spécifique de désactivation du dispositif de blocage, réalisée usuellement, ce qui simplifie la réalisation.

Selon un deuxième aspect, l'invention propose un composant à rideau enroulable comprenant un tel dispositif.

D'autres particularités et avantages de l'invention apparaîtront dans la description qui suit, faite en référence aux figures jointes dans lesquelles :

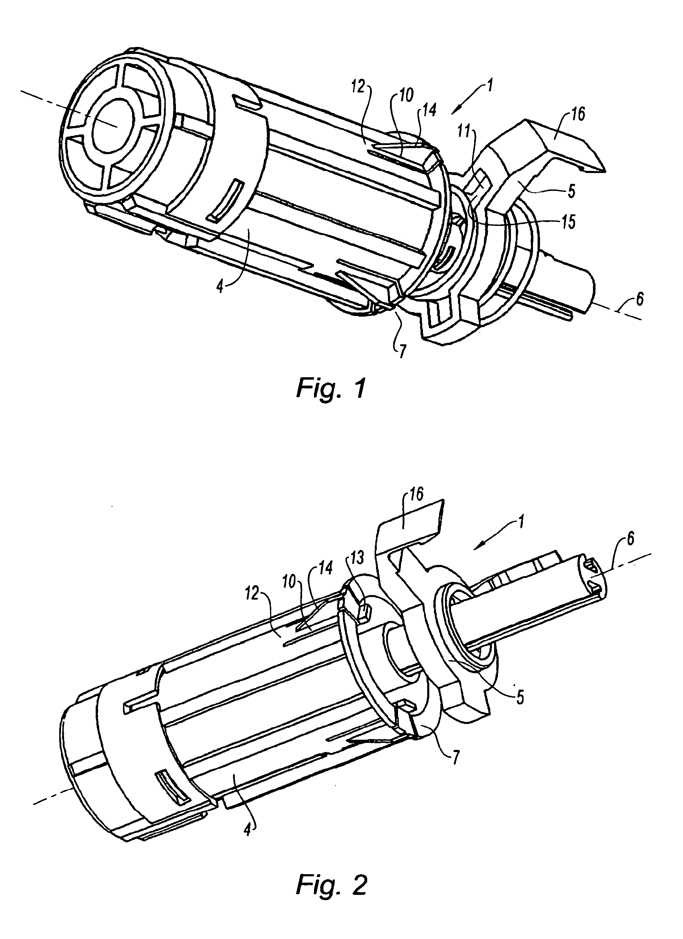

- les figures 1 et 2 sont une représentation schématique éclatée en perspective, sous deux angles de vue, d'un système selon un mode de réalisation,
- les figures 3 et 4 sont une représentation schématique en coupe longitudinale du système des figures 1 et 2, ledit système étant en cours de montage (figure 3) et monté (figure 4) dans un composant à rideau enroulable, représenté partiellement.

On décrit à présent, en référence aux figures, un système 1 d'enroulement d'un rideau de composant 9 à rideau enroulable de véhicule automobile, destiné à être monté entre un tube 2 d'enroulement et un support 3 dudit composant dans le véhicule, ledit système comprenant :
- une première 4 et une deuxième 5 pièce montées en rotation relative l'une par rapport à l'autre, selon un axe 6 de rotation, chacune desdites pièces étant destinée à être solidarisée respectivement audit tube et audit support,
- un dispositif 7 de blocage de la rotation desdites pièces entre elles,
- un ressort 8 monté en précontrainte entre lesdites pièces pour actionner la rotation desdites pièces dans un sens prédéterminé, correspondant notamment au sens d'enroulement dudit rideau,
ledit dispositif de blocage étant agencé pour être désactivé, par montage dudit système sur ledit tube ou ledit support, de sorte à permettre la rotation desdites pièces entre elles.

Le composant 9 est par exemple un cache bagages, un filet de sécurité ou un store pare soleil.

Le dispositif de blocage comprend au moins une languette 10 - et notamment trois languettes - solidaire de la première pièce 4 et coopérant, en position de blocage, avec un logement 11 - et notamment trois logements respectifs - solidaire de la deuxième pièce 5, ladite languette étant déplaçable vers une position de déblocage par montage du tube 2 sur ladite première pièce.

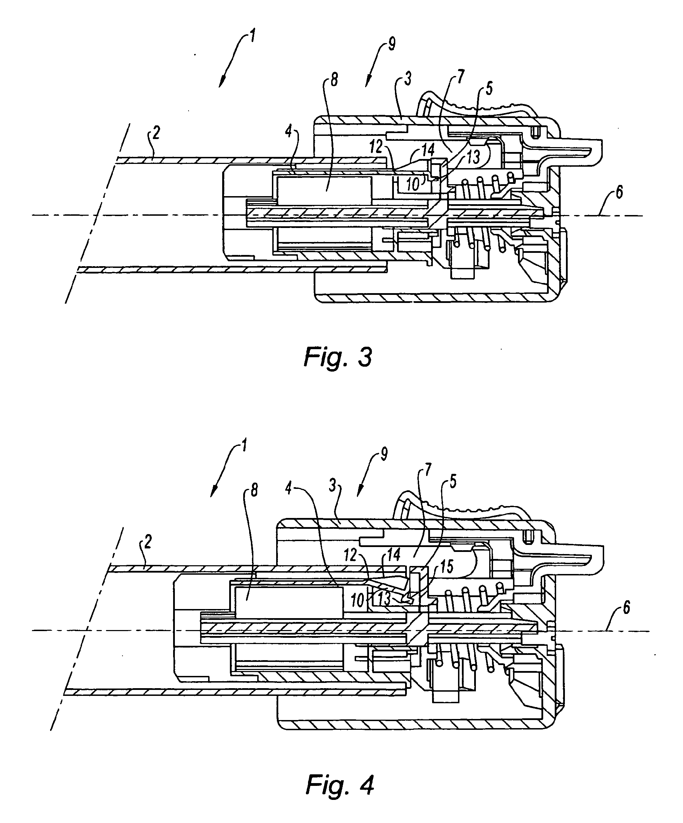

Comme représenté en figures 3 et 4, la première pièce 4 est agencée pour pouvoir s'emboiter axialement dans le tube 2, la languette 10 s'étendant axialement et comprenant une base 12 autour de laquelle elle est déplaçable en rotation, une extrémité libre 13 d'engagement dans le logement 11 et une surface 14 agencée pour pouvoir s'appuyer contre ledit tube une fois l'emboitement réalisé (figure 4), de sorte à réaliser le déplacement de ladite languette vers la position de déblocage.

La surface 14 est sous forme de pan incliné, de sorte à faciliter l'emboitement de la première pièce 4 dans le tube 2, l'extrémité la plus épaisse dudit pan étant tournée vers la deuxième pièce 5.

Le logement 11 comprend une ouverture radiale 15 agencée pour permettre le passage de l'extrémité libre 13 de la languette 10 lors du passage de ladite languette vers la position de déblocage.

Le support 3 est formé, dans la réalisation représentée, par un embout d'extrémité du composant 9.

La deuxième pièce 5 comprend un moyen d'accrochage 16, ici sous forme de pattes se terminant en forme de harpon, destiné à coopérer avec un moyen d'accrochage réciproque, non visible sur les figures, prévu sur le support 3.

En variante non représentée, le support 3 peut être une ébénisterie de véhicule automobile, la deuxième pièce 5 comprenant un moyen de montage sur ladite ébénisterie.

Un composant 9 à rideau enroulable de véhicule automobile comprend au moins un - et notamment deux, situés à chacune de ses extrémités - système 1, ledit système étant monté entre le tube 2 et le support 3, ledit tube étant en précontrainte dans le sens d'enroulement lorsque le rideau est enroulé.

## Revendications

1. Système (1) d'enroulement d'un rideau de composant (9) à rideau enroulable de véhicule automobile, ledit système étant monté entre un tube (2) d'enroulement et un support (3) dudit composant dans le véhicule, ledit système comprenant :
• une première (4) et une deuxième (5) pièce montées en rotation relative l'une par rapport à l'autre, selon un axe (6) de rotation, chacune desdites pièces étant solidarisée respectivement audit tube et audit support,
• un dispositif de blocage (7) de la rotation desdites pièces entre elles,
• un ressort (8) monté en précontrainte entre lesdites pièces pour actionner la rotation desdites pièces dans un sens prédéterminé,
ledit dispositif de blocage est désactivé, par montage dudit système sur ledit tube ou ledit support, permettant la rotation desdites pièces entre elles, ledit système étant **caractérisé en ce que** le dispositif de blocage (7) comprend au moins une languette (10) solidaire de la première pièce (4) et coopérant, en position de blocage, avec un logement (11) solidaire de la deuxième pièce (5), ladite languette étant déplaçable vers une position de déblocage par montage du tube (2) sur ladite première pièce.

2. Système selon la revendication 1, la première pièce (4) étant agencée pour pouvoir s'emboiter axialement dans le tube (2), la languette (10) s'étendant axialement et comprenant une base (12) autour de laquelle elle est déplaçable en rotation, une extrémité libre (13) d'engagement dans le logement (11) et une surface (14) agencée pour pouvoir s'appuyer contre ledit tube une fois l'emboitement réalisé, de sorte à réaliser le déplacement de ladite languette vers la position de déblocage.

3. Système selon la revendication 2, la surface (14) étant sous forme de pan incliné, de sorte à faciliter l'emboitement de la première pièce (4) dans le tube (2), l'extrémité la plus épaisse dudit pan étant tournée vers la deuxième pièce (5).

4. Système selon l'une quelconque des revendications 2 ou 3, le logement (11) comprenant une ouverture (15) radiale agencée pour permettre le passage de l'extrémité libre (13) de la languette (10) lors du passage de ladite languette vers la position de déblocage.

5. Système selon l'une quelconque des revendications 1 à 4, la deuxième pièce (5) comprenant un moyen d'accrochage (16), destiné à coopérer avec un moyen d'accrochage réciproque prévu sur le support (3).

6. Composant (9) à rideau enroulable de véhicule automobile, ledit composant comprenant au moins un système selon l'une quelconque des revendications 1 à 5, ledit système étant monté entre le tube (2) et le support (3), ledit tube étant en précontrainte dans le sens d'enroulement lorsque le rideau est enroulé.

## Claims

1. Winding system (1) for a blind for a vehicle component with a roller blind (9), said system being assembled between a winding tube (2) and a support (3) of said component in the vehicle, said system comprising:
- a first (4) and a second (5) part assembled in relative rotation one in relation to the other, according to an axis (6) of rotation, each one of said parts being attached respectively to said tube and to said support,
- a locking device (7) for the rotation of said parts together,
- a pre-stressed spring (8) mounted,between said parts in order to actuate the rotation of said parts in a predetermined direction,
said locking device is deactivated, by assembly of said system on said tube or said support, allowing the rotation of said parts together, said system being **characterised in that** the locking device (7) comprises at least one tab (10) attached to the first part (4) and cooperating, in locking position, with a housing (11) attached to the second part (5), said tab able to be displaced to an unlocking position by assembling the tube (2) on said first part.

2. System according to claim 1, the first part (4) being arranged in order to nest axially in the tube' (2), the tab (10) extending axially and comprising a base (12) around which it can be displaced in rotation, one end free (13) from engagement in the housing (11) and a surface (14) arranged in order to press against said tube once the nesting has occurred, in such a way as to carry out the displacement of said tab towards the unlocking position.

3. System according to claim 2, the surface (14) being in the form of an inclined panel, in such a way as to facilitate the nesting of the first part (4) in the tube (2), with the thickest end of the panel turned towards the second part (5).

4. System according to any of claims 2 or 3, the housing (11) comprising a radial opening (15) arranged in order to allow for the passage of the free end (13) of the tab (10) during the passage of said tab towards the unlocking position.

5. System according to any of claims 1 to 4, the second part (5) comprising a means of hooking (16), intended to cooperate with a reciprocal means of hooking provided on the support (3).

6. Vehicle component (9) with a roller blind, said component comprising at least one system according to any of claims 1 to 5, said system being assembled between the tube (2) and the support (3), said tube being pre-stressed in the winding direction when the blind is wound.

## Patentansprüche

1. Vorhangaufrollsystem (1) für einen Kraftfahrzeugbauteil (9) mit einem Rollo, wobei das System zwischen einem Aufrollrohr (2) und einem Träger (3) des Bauteils im Fahrzeug montiert ist, wobei das System Folgendes umfasst:
- ein erstes (4) und ein zweites (5) Werkstück, die drehend in Bezug auf ein anderes entlang einer Drehachse (6) montiert sind, wobei jedes der Werkstücke mit dem Rohr bzw. mit dem Träger fest verbunden ist,
- eine Blockiervorrichtung (7) der Drehung der Werkstücke untereinander,
- eine Feder (8), die unter Vorspannung zwischen den Werkstücken montiert ist, um die Drehung der Werkstücke in einer vorbestimmten Richtung zu in Gang zu setzen, die Blockiervorrichtung wird durch Montage des Systems auf das Rohr oder den Träger deaktiviert, indem es die Drehung der Werkstücke untereinander ermöglicht, wobei das System **dadurch gekennzeichnet ist, dass** die Blockiervorrichtung (7) mindestens eine Lasche (10) umfasst, die mit dem ersten Werkstück (4) fest verbunden ist und in der blockierenden Position mit einem Gehäuse (11) zusammenarbeitet, das mit dem zweiten Werkstück (5) fest verbunden ist, wobei die Lasche durch Montage des Rohrs (2) auf dem ersten Werkstück in eine entblockierende Position verschoben werden kann.

2. System nach Anspruch 1, wobei das erste Werkstück (4) angeordnet ist, um sich axial in das Rohr (2) einzufügen, wobei sich die Lasche (10) axial erstreckt und eine Basis (12) umfasst, um die sie drehend bewegt werden kann, eine freies Ende (13) zum Eingreifen in das Gehäuse (11) und eine Fläche (14), die angeordnet ist, um sich gegen das Rohr stützen zu können, nachdem die Einfügung durchgeführt ist, um die Verschiebung der Lasche in die entblockierende Position durchzuführen.

3. System nach Anspruch 2, wobei die Fläche (14) die Form einer schrägen Seite hat, so dass die Einfügung des ersten Werkstücks (4) in das Rohr (2) erleichtert wird, wobei das dickste Ende der Seite gegen das zweite Werkstück (5) gedreht ist.

4. System nach einem der Ansprüche 2 oder 3, wobei das Gehäuse (11) eine radiale Öffnung (15) umfasst, die angeordnet ist, um den Durchgang des freien Endes (13) der Lasche (10) beim Übergang der Lasche in die entblockierende Position zu ermöglichen.

5. System nach einem der Anspruche 1 bis 4, wobei das zweite Werkstück (5) ein Verankerungsmittel (16) umfasst, das dazu vorgesehen ist, mit einem reziproken Verankerungsmittel zusammenzuarbeiten, das auf dem Träger (3) vorgesehen ist.

6. Kraftfahrzeugbauteil (9) mit einem Rollo, wobei das Bauteil mindestens ein System nach einem der Ansprüche 1 bis 5 umfasst, wobei das System zwischen dem Rohr (2) und dem Träger (3) montiert ist, wobei sich das Rohr unter Vorspannung in Richtung des Aufrollens befindet, wenn der Vorhang aufgerollt ist.
